# FASCICULE DE BREVET EUROPEEN

(11) **EP 1 994 745 B1**
(45) Date de publication et mention de la délivrance du brevet: **24.10.2012**
(21) Numéro de dépôt: 07731677.6
(22) Date de dépôt: 01.03.2007
(51) Int. Cl.: H04N 7/16, H04L 29/06

(54) **PROCÉDÉ POUR LA DISTRIBUTION SÉCURISÉE DE SÉQUENCES AUDIOVISUELLES, DÉCODEUR ET SYSTÈME POUR LA MISE EN UVRE DE CE PROCÉDÉ**
VERFAHREN ZUR SICHEREN BEREITSTELLUNG AUDIOVISUELLER SEQUENZEN, DECODER UND SYSTEM DAFÜR
METHOD FOR SECURELY DELIVERING AUDIOVISUAL SEQUENCES, DECODER AND SYSTEM THEREFOR

(30) Priorité: 10.03.2006 FR 0650814
(43) Date de publication de la demande: 26.11.2008
(73) Titulaire: NAGRA FRANCE SAS, 75015 Paris (FR)
(72) Inventeur: LECOMTE, Daniel, F-75116 Paris (FR); FOLEA, Octavian, F-94270 Le Kremlin Bicetre (FR)
(74) Mandataire: Leman Consulting S.A.
(86) Numéro de dépôt international: PCT/FR2007/050860
(87) Numéro de publication internationale: WO 2007/104876

(56) Documents cités:
- EP-A1- 0 993 142
- DE-A1- 10 055 237
- FR-A- 2 868 654
- FR-A1- 2 843 517
- FR-A1- 2 849 980
- FR-A1- 2 851 110
- FR-A1- 2 861 240
- FR-A1- 2 862 835
- US-A- 5 937 164
- RUSNAK J G: "ANYWHERE IN THE HOME" PROCEEDINGS OF THE INTERNATIONAL WORKSHOP ON COMMUNITY NETWORKING, septembre 1997 (1997-09), pages 19-24, XP002931532

## Description

La présente invention concerne le domaine de la distribution sécurisée de séquences audiovisuelles.

Une technique de sécurisation d'une séquence audiovisuelle consiste à altérer, au moment de la diffusion, le flux audiovisuel numérique pour qu'il soit compatible avec les formats standards et puisse être reconnu par un équipement de lecture, mais ne puisse être vu ou entendu, c'est à dire consommé en l'état d'une manière satisfaisante pour un destinataire. Une information complémentaire est transmise par une voie séparée. La combinaison du flux numérique principal et de cette information complémentaire permet seule la consommation de la séquence audiovisuelle initiale.

L'usager dispose d'un décodeur recevant ledit flux numérique principal, également appelé flux audiovisuel modifié, ainsi que l'information complémentaire. Ce décodeur doit disposer d'un moyen de stockage de masse pour assurer un tampon entre le flux entrant, pouvant être limité par le débit de la liaison entre le décodeur et le réseau, et le processeur audiovisuel assurant la recomposition. De plus, le stockage de masse doit être sécurisé contre les éventuelles tentatives de récupération de la séquence audiovisuelle initiale. Il s'agit donc d'un équipement relativement cher, limitant les possibilités de diffusion de séquences selon cette technique.

Afin de répondre a ce problème général, la demande WO 2004/066627 propose la mise en oeuvre d'un décodeur simplifié, tout en garantissant une grande sécurité contre le piratage, par un procédé pour la distribution de séquences vidéo consistant à diffuser un flux numérique principal et une information complémentaire nécessaire à la visualisation de la séquence vidéo, et à reconstruire sur le site de réception le flux vidéo visualisable sur un équipement muni d'un écran, caractérisé en ce que le site de réception comporte un ordinateur personnel comprenant une liaison haut-débit et des moyens de stockage de masse, et un périphérique de traitement vidéo muni de moyens de communication avec ledit ordinateur personnel et de transmission du flux visualisable à un dispositif d'affichage, le flux numérique principal étant reçu par ledit ordinateur personnel, l'application logicielle de reconstruction du flux d'affichage étant exécutée dans le périphérique de traitement vidéo et non pas dans l'ordinateur personnel.

Toutefois, ce type de procédé présente l'inconvénient de fournir un niveau de sécurité limité par rapport aux attaques qui ont comme but la récupération illicite de la séquence vidéo. Cette limitation est apportée par l'ordinateur personnel qui est en charge de l'identification et l'authentification de l'utilisateur, ainsi que de la transmission de l'information complémentaire vers le périphérique de traitement vidéo.

L'architecture matérielle de l'ordinateur personnel est ouverte, ce qui permet à tous ses utilisateurs un accès total et non-restrictif a chacune de ses composantes système : la mémoire vive, le processeur, les moyens de stockage ou les interfaces entrée/sortie. Ainsi, un pirate dispose de tous les moyens pour intercepter l'information complémentaire en clair au niveau d'interfaces entrée/sortie ou mémoire vive au moment de son traitement par l'ordinateur personnel.

Au vu du document WO 2004/066627, le problème résolu par l'invention est d'améliorer la sécurité du procédé de distribution de séquences vidéo.

Ce problème est résolu grâce à un procédé tel que décrit dans la revendication 1.

Grâce à l'utilisation de la passerelle sécurisée, la présente invention permet de contrôler la transmission sécurisée de ladite information complémentaire vers le périphérique de traitement vidéo par une passerelle sécurisée et non plus par un ordinateur personnel comme dans le document susmentionné.

Il est connu qu'une passerelle sécurisée est un dispositif comprenant:
- une architecture matérielle fermée qui empêche l'accès non autorisé a au moins une composante logicielle ou matérielle par des moyens matérielles,
- un noyau sécurisé qui réglemente l'accès autorisé a au moins une composante logicielle ou matérielle par différents niveaux de sécurité, qui varient entre un accès total jusqu'à l'interdiction totale.

De façon facultative, une telle passerelle sécurisée peut également être telle que la composante comprend des moyens pour stocker une information permettant l'identification unique de la passerelle sécurisée, ladite information étant enregistrée au moment de la création de ladite composante et ne pouvant pas être modifiée ultérieurement.

Il est clair pour l'homme de l'art que l'ordinateur personnel tel qu'employé par la demande WO 2004/066627 ne contient aucune composante qui répond aux critères définissant la passerelle sécurisée puisque :
- l'architecture matérielle de l'ordinateur personnel est ouverte, permettant un accès total et non restrictif a toutes les composantes dudit ordinateur personnel (la mémoire vive, le processeur, les moyens de stockage, les interfaces entré/sortie, etc.);
- l'ordinateur personnel offre à l'utilisateur des moyens (le clavier, l'écran, l'imprimante etc.) pour la visualisation et la modification des données qui sont traitées ou transportées par lesdites composantes a chaque moment pendant son état de marche;
- l'architecture ouverte de l'ordinateur facilite à l'utilisateur l'extraction de chaque composante et son utilisation à l'aide d'un autre ordinateur personnel ou tout un autre type de dispositif de traitement;
- l'ordinateur personnel ne contient aucune composante capable d'empêcher la modification d'une information capable d'identifier d'une manière unique ledit ordinateur personnel.

Un exemple non limitatif d'un dispositif qui réponde aux critères d'une passerelle sécurisée est la carte à puce. Elle contient un noyau sécurisé qui protège l'accès a ses composantes: les mémoires de type ROM (Read Only Memory), PROM (Programmable Read Only Memory) et EEPROM (Electrically Erasable read Only Memory). La mémoire ROM est écrite par le manufacturier et elle ne peut pas être modifiée après. La mémoire PROM contient une information permettant l'identification unique de la carte à puce. L'accès à la mémoire EEPROM est permis selon les niveaux de sécurité. La carte à puce est par exemple au format standard ISO 7816, et comprend, de façon connue en soi, une architecture matérielle fermée qui empêche l'accès non autorisé à ses composantes logicielles ou matérielles par des moyens matériels comme la miniaturisation et l'exploitation des champs magnétiques. Grâce à ces caractéristiques, l'accès non autorisé aux composantes d'une carte à puce demande des dispositifs et des compétences extrêmement sophistiqués et coûteux qui ne sont pas à la portée du grand public.

Les cartes à puce connaissent une multitude d'usages dans des dispositifs hétérogènes: téléphones mobile, cartes bancaires, badges d'accès, etc. Par rapport aux ordinateurs personnels, les téléphones portables avec une carte à puce (la carte SIM - Subscriber Identity Module) connaissent un déploiement plus large sur le marché et apportent à l'usager une meilleure ergonomie et facilité d'usage.

L'état de l'art connaît de plus en plus la prolifération d'équipements réseau qui contient des composantes sécurisées permettant d'un côté la protection de flux des données qui circulent en réseau, et de l'autre côté l'accès aux paramètres de configuration desdites équipements. À la lumière de ces caractéristiques, l'homme de l'art considère lesdits équipements comme des passerelles sécurisées.

Il est surprenant pour l'homme du métier que la sécurisation d'un flux audiovisuel puisse être réalisé par une carte à puce, notamment du fait des faibles capacités de mémoire et d'une puissance de calcul limitée d'une telle carte à puce. La Demanderesse a toutefois découvert qu'une telle carte à puce peut réaliser cette fonction de sécurisation du flux audiovisuel en sécurisant, et notamment en réalisant des opérations cryptographique sur une information complémentaire distincte du flux audiovisuel nominal.

L'information complémentaire dépend du type de contenu audiovisuel à transmettre. Cette information complémentaire peut par exemple être générée comme dans la demande WO 2004/032418 pour une séquence audio, ou comme dans la demande WO 2003/063445 pour une séquence audiovisuelle au format MPEG. L'information complémentaire peut également comprendre des informations personnalisées en fonction du destinataire comme dans la demande WO 2004/073311, ou des informations de marquage visible comme dans la demande WO 2004/062281 ou invisible comme dans la demande 06/55315. Comme dans ces demandes, le flux numérique principal est de préférence généré en extrayant au moins un coefficient du flux nominal et en insérant ce ou ces coefficients extraits dans l'information complémentaire.

Dans tous ces cas, comme dans l'invention, le traitement de l'information complémentaire et du flux numérique principal par un module de synthèse permet de consommer le flux nominal, par exemple en reconstruisant ce flux à l'identique, ou en lui ajoutant des données visibles ou invisibles, alors que le flux numérique principal n'est pas consommable au niveau de l'équipement destinataire en l'absence de l'information complémentaire.

Puisque l'information complémentaire peut être de taille réduite, et typiquement 1% de la taille du flux audiovisuel nominal, la sécurisation par carte à puce est possible en réalisant les opérations cryptographiques sur l'information complémentaire et non sur l'ensemble du contenu du flux audiovisuel nominal.

L'invention concerne donc avantageusement l'utilisation d'une carte à puce pour sécuriser la distribution d'un flux audiovisuel, notamment en réalisant des opérations cryptographiques sur l'information complémentaire.

On peut noter que, dans la demande WO 2004/066627, l'ordinateur personnel comprend un lecteur de carte, et est susceptible de recevoir une carte à puce. Toutefois, dans ce document, la carte à puce ne réalise aucune fonction cryptographique mais uniquement des fonctions d'authentification et de stockage. Dans la demande WO 2004/066627, toutes les fonctions cryptographiques de protection sont réalisées par l'ordinateur personnel, avec les désavantages mentionnés plus haut.

La passerelle sécurisée selon l'invention peut en outre réaliser les fonctions d'authentification et de stockage comme le faisait l'ordinateur associé au lecteur de carte à puce dans la demande WO 2004/066627.

L'utilisation de la passerelle sécurisée permet d'améliorer la sécurité du procédé de distribution et permet donc notamment de résoudre le problème susmentionné.

De plus, le flux numérique principal est transmis par le serveur par l'intermédiaire d'un réseau numérique, le périphérique de traitement audiovisuel (2) comprenant une liaison haut débit pour recevoir ledit flux numérique principal.

Avantageusement, le flux numérique principal est transmis par le serveur par l'intermédiaire d'un support matériel, le périphérique de traitement audiovisuel (2) comprenant un lecteur pour exploiter ledit support matériel et lire ledit flux numérique principal.

Avantageusement, le flux numérique principal est transmis par la passerelle sécurisée ou par un ordinateur personnel par l'intermédiaire des liaisons filaires par exemple de type Ethernet, FIREWIRE ou USB-2, ou par une des liaisons sans fil par exemple de type Bluetooth, WiFi ou AirPort, le périphérique de traitement audiovisuel (2) comprenant une ou plusieurs interfaces capables de recevoir ledit flux numérique principal.

Selon une première variante, le flux numérique principal est reçu directement par le périphérique de traitement audiovisuel.

Selon une deuxième variante, le flux numérique principal est reçu par un ordinateur personnel situé dans la proximité du périphérique de traitement audiovisuel, ledit flux numérique principal étant transmis par une connexion réseau locale au périphérique de traitement audiovisuel.

Selon une troisième variante, le flux numérique principal est stocké sur un périphérique de stockage pouvant être lu par le périphérique de traitement audiovisuel.

Selon une quatrième variante, le flux numérique principal est reçu par la passerelle sécurisée avant d'être transmis au périphérique de traitement audiovisuel.

Dans tous les cas, l'information complémentaire est reçue par la passerelle sécurisée, avant d'être transmise au périphérique de traitement audiovisuel.

Dans une autre variante, le flux numérique principal est conforme à la norme ou au standard du flux audiovisuel original.

Avantageusement, des droits digitaux sur la consommation du flux numérique principal sont transmis par un serveur et sont acquis par la passerelle sécurisée.

Dans un mode de mise en oeuvre, la passerelle sécurisée comporte un module de sécurisation pour la réception de l'information complémentaire transmise par le serveur. De plus, elle comporte un module de routage pour l'information complémentaire entre la passerelle sécurisée et le périphérique de traitement audiovisuel du décodeur.

Avantageusement, la passerelle sécurisée comporte un gestionnaire des droits digitaux qui conditionnent la consommation du flux numérique principal par le périphérique de traitement audiovisuel (2).

Avantageusement, une authentification est effectuée entre le serveur audiovisuel et la passerelle sécurisée lors de la demande d'information complémentaire.

Avantageusement, une authentification requise par le protocole de transmission de l'information complémentaire est effectuée entre la passerelle sécurisée et le périphérique de traitement audiovisuel du décodeur. Avantageusement, une composante de l'authentification est la vérification des droit digitaux acquiert auparavant.

L'invention concerne également un décodeur comportant une entrée pour recevoir un flux numérique, un circuit de traitement audiovisuel pour recomposer un flux consommable à partir dudit flux numérique et d'une information complémentaire, et une sortie délivrant un signal audiovisuel affichable sur un dispositif d'affichage et/ou d'écoute.

De préférence, le décodeur comprend un moyen de communication avec un réseau pour la réception de l'information complémentaire.

Selon une variante, il comprend un moyen de communication avec la passerelle sécurisée pour la réception du flux numérique principal.

Selon un mode de réalisation préféré, le décodeur comprend des moyens de communication sans fil avec un ordinateur personnel, pour la réception du flux numérique.

La présente invention décrit également un système pour la mise en oeuvre du procédé comprenant un décodeur, une passerelle sécurisée, le dispositif comportant un lecteur de disques sur lesquels sont enregistrés les flux numériques principaux et le décodeur comportant des moyens de communication avec ledit dispositif, pour recevoir le flux numérique principal.

L'invention sera mieux comprise à la lecture de la description qui suit, se référant aux dessins annexés correspondant à des exemples non limitatifs de réalisation, où :
- la figure 1 représente le schéma de principe d'un décodeur selon l'invention ;
- la figure 2 représente une première variante d'un décodeur selon l'invention.

Pour la réception et l'exploitation des séquences audiovisuelles diffusées, chaque utilisateur devra disposer de deux équipements qui sont complémentaires :
- une passerelle sécurisée (1),
- un décodeur (2).

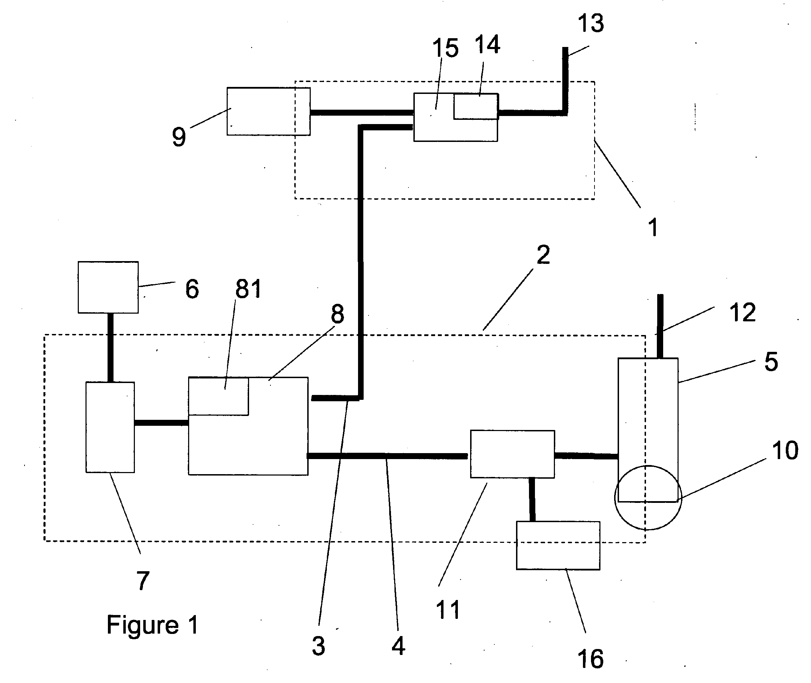

Sur la figure 1, le décodeur (2) comporte une sortie pour relier au moins un dispositif d'affichage et/ou d'écoute, par exemple un moniteur, un vidéo projecteur, dispositif de type écran de télévision, un lecteur de contenus audio, un PDA ou tout autre appareil comme par exemple une chaîne audiovisuelle (6).

Le décodeur (2) comprend principalement, d'une part, une unité de traitement adaptée pour traiter, en particulier décoder et désembrouiller tout flux audiovisuel numérique, par exemple de type MPEG selon un programme logiciel de décodage et de désembrouillage pré-chargé, de manière à l'afficher, en temps réel et, d'autre part, au moins une interface audiovisuelle (7).

Le décodeur est également raccordé à une passerelle (1) par une ou des liaisons filaires par exemple de type Ethernet, FIREWIRE ou USB-2, ou par une des liaisons sans fil par exemple de type Bluetooth, WiFi ou AirPort. La liaison (3) achemine l'information complémentaire, et la liaison (4) achemine le flux audiovisuel modifié par le serveur pour le rendre inexploitable en l'état.

Avantageusement la liaison (3) est confondue avec la liaison (4).

Lorsque l'usager du décodeur (2) veut réellement consommer sur sa chaîne audiovisuelle (6) le programme audiovisuel, il en fait la demande au système de synthèse (8) avec sa télécommande comme il le ferait avec un magnétoscope ou un lecteur de DVD présentant un menu sur son écran de télévision (6). Le décodeur dialogue avec la passerelle sécurisée (1) pour déclencher l'envoi du flux audiovisuel modifié. Le système de synthèse (8) commence à analyser le flux numérique modifié en provenance du disque dur (10) du décodeur via le tampon de lecture (11) du décodeur. Le décodeur (2) établit alors une liaison avec le serveur audiovisuel via le réseau de télécommunication (12) qui est dans notre exemple une liaison à l'Internet de type DSL ou une liaison à un réseau local.

Avantageusement, la télécommande est intégrée dans la passerelle sécurisée (1).

Le disque dur (10) du décodeur (2) peut être utilisé comme mémoire tampon pour stocker momentanément au moins une partie du programme ou de la séquence audiovisuelle à consommer, en cas de visualisation différée ou de limitation dans la bande passante du réseau de transmission (12). La consommation peut être retardée ou différée à la demande de l'utilisateur ou du serveur audiovisuel.

Avantageusement, le lecteur de disque (10) est situé à l'extérieur du décodeur (2) et lié à celui-lui par une connexion filaire de type USB-2, FIREWIRE ou une connexion propriétaire du décodeur (2).

Comme le montre la figure 1, l'interface de connexion (5) du décodeur (2) est reliée à un réseau de transmission et de diffusion large bande (12) telle qu'un modem, un modem satellite, un modem câblé, d'une interface de ligne à fibre optique ou d'une interface radio ou infrarouge pour la communication sans-fil.

C'est par cette liaison classique de diffusion audiovisuelle que seront transmis les contenus des programmes audiovisuels comme des films. Toutefois, de façon à ne pas laisser faire de copies pirates, avant de transmettre le contenu audiovisuel depuis le serveur il est prévu de conserver une petite partie du contenu audiovisuel dans le portail ou le serveur audiovisuel.

En cas de consommation d'un programme audiovisuel en temps réel, cette petite partie du contenu audiovisuel, appelée aussi information complémentaire, conservée dans le serveur sera également envoyée au module d'interface (15) via le réseau de télécommunication (13) qui peut être le même réseau que celui de transmission et de diffusion large bande (12).

Avantageusement, le module (15) comprend une fonction de routage (14) permettant de transférer les données entre le serveur audiovisuel et le décodeur (2) de manière à ce qu'aucun traitement spécifique sur lesdites données ne soit effectué par la passerelle sécurisée (1).

Comme les images successives d'une séquence audiovisuelle comportent un grand nombre d'éléments visuels identiques (comme en cinéma, une image ressemble à la précédente), MPEG n'enregistre que les éléments qui diffèrent de l'image d'origine. Par exemple, et sans que cet exemple soit limitatif de l'invention, une image entière de référence est modifiée en conservant les coefficients DC des modifications apportées dans le portail et, pour les images successives qui dépendent de cette image I de référence, il n'est pas nécessaire d'apporter des modifications puisqu'elles feront diverger le flux consommé en raison des perturbations apportées aux images I de référence. La compression MPEG commence donc, dans un premier temps, par décomposer l'image en différentes matrices carrées comportant plusieurs points ou pixels, ayant chacun leur propre valeur colorimétrique. Un calcul permet d'obtenir une valeur moyenne pour chaque matrice au sein de laquelle chaque point est maintenant noyé. Ce traitement génère une pixellisation et l'apparition d'aplats uniformes, là où existaient des nuances de teinte. La deuxième étape de la compression MPEG consiste à ne conserver d'une image à l'autre que les éléments changeants.

Dans le cas d'un programme audiovisuel de type MPEG, toutes les caractéristiques des images I en provenance du serveur audiovisuel ne sont pas transmises vers le module (5). En particulier, les caractéristiques peuvent être les coefficients de corrélation DC contenus dans les images I.

Certains coefficients DC de ces images I sont conservés dans le serveur audiovisuel. Par contre, en lieu et place des coefficients DC de ces images I non transmis, le serveur intercalera de faux coefficients DC de même nature que les coefficients DC enlevés et conservés dans le portail de sorte que le Lecteur standard MPEG du module (8) ne soit pas perturbé par ces modifications qu'il ignorera et reconstituera en sortie un flux de sortie MPEG qui sera non correct du point de vue visuel pour un être humain mais correct du point de vue format MPEG, c'est-à-dire le flux numérique principal contenant des faux coefficients DC est conforme à la norme MPEG. D'une manière générale les modifications sur des coefficients sont effectuées de manière à ce que le flux numérique principal modifié soit strictement conforme à la norme ou au standard du flux audiovisuel numérique original.

Le lecteur MPEG (8) du décodeur (2) est un lecteur standard MPEG et n'est en aucune manière modifié ou affecté par les changements apportés aux images I.

Comme le montre la figure 1, l'interface de connexion de la passerelle sécurisée (1) est reliée à un réseau de télécommunication étendu, directement ou par un réseau local servant de réseau d'accès et est constitué par exemple d'une interface de ligne d'abonné (Réseau téléphonique analogique ou numérique, DSL, BLR, GSM, GPRS, UMTS, etc.).

Ainsi donc, les programmes audiovisuels sont diffusés de façon classique en mode multi diffusion (« broadcast ») via le réseau de transmission large bande (12) de type hertzien, câble, satellite, numérique hertzien, DSL, etc. Chaque programme audiovisuel ainsi diffusé peut être crypté ou non, et, les flux de type MPEG comportent des modifications au niveau de certaines images I comme décrit ci-dessus. En fonction des paramètres choisis par l'usager ou des informations transmises par le serveur de diffusion, certains programmes audiovisuels ainsi modifiés et incomplets sont enregistrés dans le disque dur de l'ordinateur (1).

Lorsque l'usager désire consommer un programme audiovisuel ainsi enregistré dans le disque dur (10) de son décodeur (2) il se connecte alors au portail via la liaison de type réseau local ou accès direct et à travers le réseau de télécommunication lui-même relié au serveur audiovisuel.

Tout au long de la consommation du programme audiovisuel, les liaisons restent établies et permettent à la passerelle sécurisée (1) de recevoir via la liaison (13) les fonctions et les paramètres de remise en ordre des coefficients DC modifiés des images I. Le flux numérique principal en provenance du disque dur du décodeur (2) et l'information complémentaire provenant du serveur audiovisuel via la liaison (13) sont transmis par au décodeur (2) via respectivement les liaisons (4) et (3). La combinaison du flux numérique principal et de cette information complémentaire permet seule la consommation de la séquence audiovisuelle initiale. Les coefficients DC modifiés des images I ainsi transmis ne sont jamais enregistrés dans le disque dur du décodeur (2) car les images I reconstituées sont directement affichées sur l'écran de visualisation (6) via le traitement effectué par le décodeur (2) après avoir été traitées par le Lecteur (8) à partir de sa mémoire locale volatile (81). Une fois traités et visualisés, les coefficients DC modifiés et/ou manquants des images I venant d'être transmis par le serveur audiovisuel seront effacés de la mémoire volatile locale (81) du décodeur (2).

A chaque fois que l'usager voudra regarder un programme enregistré dans le disque dur (10) du décodeur (2) il se connectera automatiquement vers la passerelle sécurisée (1). Selon un mode de réalisation particulier, la passerelle sécurisée (1) comprend un lecteur de cartes à puce (9) qui permettra au portail d'authentifier l'usager propriétaire de la passerelle sécurisée (1). L'authentification est effectuée entre le serveur audiovisuel et la passerelle sécurisée lors de la demande d'information complémentaire. Lors de cette étape d'authentification, l'information relative à ladite authentification transite via la passerelle sécurisée (1).

Selon un mode de réalisation particulier, pour un contenu audiovisuel MPEG donné, la carte à puce contient ladite information complémentaire.

Selon un mode de réalisation particulier, la consommation d'un contenu audiovisuel MPEG donné est conditionnée par des droits digitaux. Les droits digitaux représentent l'information qui précise les conditions dans lesquelles un contenu peut être consommé: (a) le nombre des consommations du contenu, (b) la date de validité à partir de laquelle le contenu peut être consommé, (c) la date d'expiration à partir de laquelle le contenu ne peut plus être consommé, (d) le domaine pour lequel la consommation est permise, (e) le type de décodeur (2) qui permet la consommation, (f) etc.

Selon une première variante, les droits digitaux sont reçus par la passerelle sécurisée (1) via la liaison (13).

Selon une deuxième variante, les droits digitaux sont reçus par la passerelle sécurisée (1) via le lecteur de cartes à puce (9).

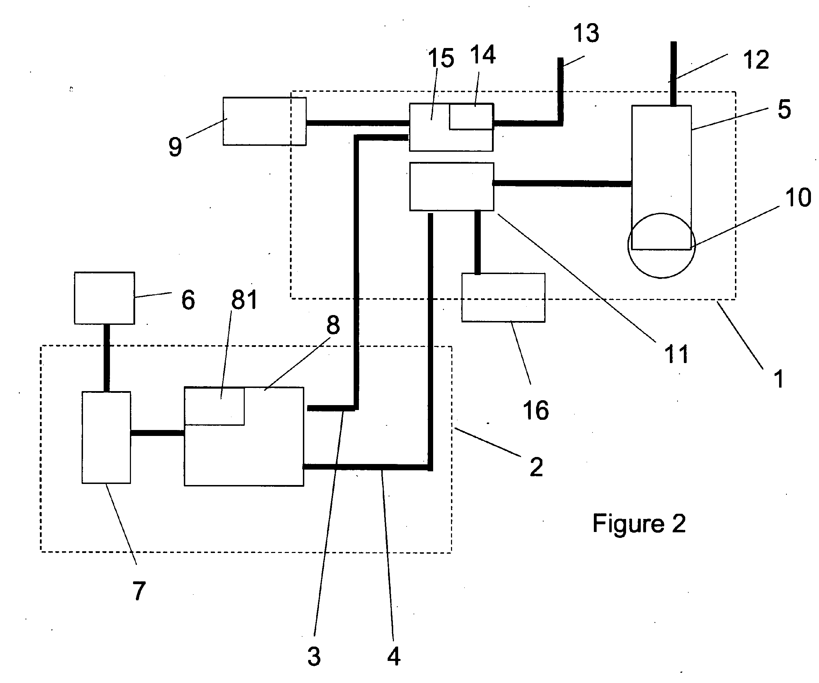

La figure 2 représente une variante de réalisation, dans laquelle la passerelle sécurisée (1) se charge de la réception de flux numérique principal envoyé par le serveur audiovisuel et la transmission dudit flux principal vers le décodeur (2) par le réseau (13).

La première étape d'authentification est effectuée entre le serveur audiovisuel et la passerelle sécurisée (2) lors de la demande d'information complémentaire.

La deuxième étape d'authentification est effectuée entre la passerelle sécurisée (1) et le décodeur (2) lors de la demande de consommation des séquences audiovisuelles.

Avantageusement dans les figures 1 et 2 le décodeur (2), respectivement la passerelle sécurisée (1) comportent un lecteur des disques (16), par exemple un lecteur de CD ou de DVD, pour lire directement des flux numériques principaux enregistrés sur disques. Les flux numériques principaux sont enregistrés au préalable sur lesdits disques.

Avantageusement les droits digitaux sont reçus par la passerelle sécurisée (1) via le réseau de transmission (12).

## Revendications

1. Procédé pour la distribution d'un flux audiovisuel nominal à un site de réception, le flux audiovisuel nominal comprenant des coefficients nominaux, le procédé comprenant :
- une étape consistant à extraire, dans le flux audiovisuel nominal au moins un coefficient nominal parmi lesdites coefficients nominaux de sorte à générer un flux numérique principal conforme à la norme ou standard du flux audiovisuel original;
- générer une information complémentaire comprenant les coefficients extraits du flux nominal de sorte que le flux audiovisuel nominal soit susceptible d'être consommé à partir de l'information complémentaire et du flux numérique principal sur le site de réception,
- réaliser des opérations cryptographiques sur l'information complémentaire,
le procédé étant **caractérisé en ce que** le site de réception reçoit le flux numérique principal et l'information complémentaire et comprend une passerelle sécurisée, et **en ce que** le procédé comprend des étapes dans lesquelles:
- la passerelle sécurisée réalise des opérations cryptographiques sur l'information complémentaire ;
- la passerelle transmet l'information complémentaire à un périphérique de traitement audiovisuel afin de permettre la consommation du flux audiovisuel nominal au niveau du périphérique de traitement audiovisuel, ladite passerelle comprenant une architecture matérielle fermée qui empêche l'accès non autorisé a au moins une composante logicielle ou matérielle par des moyens matériels, et un noyau sécurisé qui réglemente l'accès autorisé à au moins une composante logicielle ou matérielle par différents niveaux de sécurité, qui varient entre un accès total jusqu'à l'interdiction totale.

2. Procédé selon la revendication 1 dans lequel la passerelle sécurisée comprend des moyens pour stocker une information permettant l'identification unique de la passerelle sécurisée, ladite information étant enregistrée au moment de la création de ladite composante et ne pouvant pas être modifiée ultérieurement.

3. Procédé selon l'une quelconque des revendications précédentes dans lequel la passerelle sécurisée est une carte à puce.

4. Procédé pour la distribution de séquences audiovisuelles selon l'une quelconque des revendications 1 à 3, **caractérisé en ce que** l'information complémentaire est reçue et transmise au périphérique de traitement audiovisuel par la passerelle sécurisée (1).

5. Procédé pour la distribution de séquences audiovisuelles selon la revendication 4, **caractérisé en ce que** le flux numérique est reçu par la passerelle sécurisé (1) avant d'être transmis au périphérique de traitement audiovisuel.

6. Procédé pour la distribution de séquences audiovisuelles selon l'une quelconque des revendications précédentes, **caractérisé en ce qu'**une première authentification est effectuée entre un serveur audiovisuel et la passerelle sécurisée lors d'une demande d'information complémentaire audit serveur audiovisuel.

7. Procédé pour la distribution de séquences audiovisuelles selon l'une quelconque des revendications précédentes, **caractérisé en ce qu'**une deuxième authentification est effectuée entre la passerelle sécurisée et le périphérique de traitement audiovisuel lors d'une demande de consommation.

8. Passerelle sécurisée pour la mise en oeuvre du procédé selon l'une des revendications 1 à 7, **caractérisé en ce qu'**elle comprend des moyens de réception agencés pour recevoir l'information complémentaire, et des moyens cryptographique agencés pour réaliser des opérations cryptographique sur l'information complémentaire.

9. Passerelle sécurisée selon la revendication 8 comprenant une carte à puce.

10. Passerelle sécurisée selon l'une des revendications 8 ou 9 dans lequel la passerelle sécurisée comprend au moins une composante matérielle dont l'accès est réglementé par au moins un niveau de sécurité.

11. Passerelle sécurisée selon la revendication 10 dans lequel la composante comprend des moyens pour stocker une information permettant l'identification unique de la passerelle sécurisée, ladite information étant enregistrée au moment de la création de ladite composante et ne pouvant pas être modifiée ultérieurement

12. Passerelle sécurisée selon l'une des revendications 8 à 11, **caractérisé en ce qu'**elle comprend un moyen pour la gestion des droits sur le contenu.

13. Système pour la mise en oeuvre du procédé comprenant un décodeur comportant un lecteur de disques sur lesquels sont enregistrés les flux numériques principaux et en ce que le décodeur comporte des moyens de communication avec la passerelle sécurisée (1) selon l'une des revendications 8 à 12, pour recevoir l'information complémentaire.

## Claims

1. A method for delivering a nominal audiovisual stream to a receiving site, said nominal audiovisual stream comprising nominal coefficients , said method comprising:
- a step of extracting, from the nominal audiovisual stream at least nominal coefficient among the nominal coefficients to generate a main digital stream compliant with the standard of the nominal audiovisual stream;
- generating complementary information comprising the coefficients extracted from the nominal audiovisual stream so as the consumption of the nominal audiovisual stream is dependent of the complementary information and the main digital stream,
- performing cryptographic operations with the complementary information; said method being **characterized in that** the receiving site receives the main digital stream and the complementary information et comprises a secure gateway, and **in that** the method comprises the steps of :
- the gateway performs cryptographic operations with the complementary information,
- the gateway transmits the complementary information to an audiovisual processing peripheral so as to enable the consumption of the nominal audiovisual stream by the audiovisual processing peripheral, said gateway comprising a closed hardware architecture that avoid unauthorized access to at least one software or hardware component, and a secure kernel which manage the secure access to at least one software or hardware component by different security levels, which vary between a complete access to a complete blockage.

2. Method according to claim 1, wherein the secure gateway comprises includes means for storing information enabling unique identification of the secure gateway, the information being saved upon creation of the component and it being impossible to modify it subsequently.

3. Method according to any of the preceding claims, wherein the secure gateway is a chip card.

4. Method for delivering audiovisual sequences according to one of the claims 1 to 3, wherein the complementary information is received and transmitted to the audiovisual processing peripheral through the secure gateway (1).

5. Method for delivering audiovisual sequences according to claim 4, wherein the digital stream is received by the secure gateway (1) prior to being transmitted to the audiovisual processing peripheral.

6. Method for delivering audiovisual sequences according any one of the preceding claims, **characterized in that** a first authentication is carried out between an audiovisual server and the secure gateway upon a request for complementary information.

7. Method for delivering audiovisual sequences according any one of the preceding claims, **characterized in that** a second authentication is carried out between the secure gateway and the audiovisual processing peripheral upon the request for consumption.

8. A secure gateway that implements the method according to one of the claims 1 to 7, **characterized in that** it comprises receiving means arranged to receive the complementary information and cryptographic means arranged to carry out cryptographic operations on the complementary information.

9. The secure gateway according to claim 8 comprising a chip card.

10. The secure gateway according to any of the claims 9 or 9, wherein the secure gateway comprises at least one hardware component, the access to which is regulated by at least one security level.

11. The secure gateway according to claim 10, in which the component includes means for storing information enabling unique identification of the secure gateway, the information being saved upon creation of the component and it being impossible to modify it subsequently.

12. The secure gateway according to one of the claims 8 to 11, **characterized in that** it comprises means for management of rights on the contents.

13. A system to carry out the method comprising a decoder including a disk drive, whereon main digital streams are recorded and in that the decoder includes means for communicating with the secure gateway (1) according to one of the claims 8 to 12, to receive the complementary information.

## Patentansprüche

1. Verfahren zum Senden einer üblichen kontinuierlichen audiovisuellen Übertragung an einen Empfangsstandort, die Nennkoeffizienten aufweist, wobei das Verfahren folgendes umfasst:
- eine Phase die darin besteht, aus der üblichen kontinuierlichen audiovisuellen Übertragung mindestens einen Nennkoeffizienten unter besagten Nennkoeffizienten zu extrahieren, um einen digitalen Hauptstrom zu erzeugen, der konform mit der Norm oder dem Standard der originalen audiovisuellen Übertragung ist ;
- eine Zusatzinformation erzeugen, die die extrahierten Koeffizienten des Nennstroms umfasst, so dass die übliche kontinuierliche audiovisuelle Übertragung geeignet ist, konsumiert zu werden, ausgehend von der komplementären Information und vom digitalen Hauptstrom am Empfangsstandort,
- die Zusatzinformation verschlüsseln,
wobei das Verfahren **dadurch gekennzeichnet ist, dass** der Empfangsstandort den digitalen Hauptstrom und die Zusatzinformation empfängt und ein gesichertes Gateway umfasst, sowie dadurch, dass das Verfahren Phasen umfasst, in denen:
- das gesicherte Gateway die Zusatzinformation verschlüsselt;
- das Gateway überträgt die Zusatzinformation an ein Periphergerät für audiovisuelle Behandlung, um den Konsum der üblichen kontinuierlichen audiovisuellen Übertragung auf der Ebene des Periphergeräts für audiovisuelle Behandlung zu gestatten, wobei das Gateway eine geschlossene Hardwarearchitektur aufweist, die den unbefugten Zugang verhindert, sowie mindestens eine Software- oder Material-Komponente durch materielle Mittel, und einen gesicherten Kern, der den berechtigte Zugang zu mindestens einer Software- oder Material-Komponente über verschiedene Sicherheitsniveaus regelt, die zwischen einem Vollzugriff und einem Totalverbot variieren.

2. Verfahren nach Anspruch 1, bei dem das gesicherte Gateway Mittel umfasst, um eine Information zu speichern wodurch die eindeutige Identifizierung des gesicherten Gateways möglich wird, wobei besagte Information zum Zeitpunkt der Schaffung besagter Komponente gespeichert wird und nicht weiter verändert werden kann.

3. Verfahren nach einem beliebigen der vorherigen Ansprüche, bei dem das gesicherte Gateway eine Chipkarte ist.

4. Verfahren zum Senden von audiovisuellen Sequenzen nach einem beliebigen der Patentansprüche 1 bis 3, **gekennzeichnet dadurch, dass** die Zusatzinformation vom gesicherten Gateway (1) empfangen und an das Periphergerät für audiovisuelle Behandlung übertragen wird.

5. Verfahren zum Senden von audiovisuellen Sequenzen nach Anspruch 4, **gekennzeichnet dadurch, dass** der digitale Strom vom gesicherten Gateway (1) empfangen wird, bevor er an das Periphergerät für audiovisuelle Behandlung übertragen wird.

6. Verfahren zum Senden von audiovisuellen Sequenzen nach einem beliebigen der vorherigen Ansprüche, **gekennzeichnet dadurch, dass** bei einer Bitte um zusätzliche Angaben an den genannten audiovisuellen Server ein erste Authentifizierung zwischen einem audiovisuellen Server und dem gesicherten Gateway durchgeführt wird.

7. Verfahren zum Senden von audiovisuellen Sequenzen nach einem beliebigen der vorherigen Ansprüche, **gekennzeichnet dadurch, dass** bei einer Bitte um Konsum eine zweite Authentifizierung zwischen dem gesicherten Gateway und dem Periphergerät für audiovisuelle Behandlung durchgeführt wird.

8. Gesichertes Gateway zur Durchführung des Verfahrens nach einem der Ansprüche 1 bis 7, **dadurch gekennzeichnet, dass** es Empfangsmittel umfasst, um die Zusatzinformation zu empfangen, und kryptografische Mittel, um die Zusatzinformation zu verschlüsseln.

9. Gesichertes Gateway nach Anspruch 8 mit einer Chipkarte.

10. Geschützte Schnittstelle nach einem der Ansprüche 8 oder 9, wobei die geschützte Schnittstelle mindestens eine materielle Komponente umfasst, deren Zugang durch mindestens ein Sicherheitsniveau geregelt ist.

11. Geschützte Schnittstelle nach Anspruch 10, wobei die Komponente Mittel umfasst, um eine Information zu speichern, die die eindeutige Identifizierung der geschützten Schnittstelle ermöglicht, wobei besagte Information zum Zeitpunkt der Schaffung besagter Komponente gespeichert wird und nicht weiter verändert werden kann.

12. Geschützte Schnittstelle nach einem der Ansprüche 8 bis 11, **dadurch gekennzeichnet, dass** sie ein Mittel zur Verwaltung der Rechte auf den Inhalt umfasst.

13. System zur Durchführung des Verfahrens mit einem Decoder mit einem CD-Rom-Laufwerk, auf dem die wichtigsten digitalen Ströme aufgezeichnet sind, wobei der Decoder Kommunikationsmittel mit der geschützten Schnittstelle (1) nach einem der Ansprüche 8 bis 12 umfasst, um die Zusatzinformation zu empfangen.
